# EUROPÄISCHE PATENTSCHRIFT

(11) **EP 3 657 750 B1**
(45) Veröffentlichungstag und Bekanntmachung des Hinweises auf die Patenterteilung: **11.01.2023**
(21) Anmeldenummer: 18207595.2
(22) Anmeldetag: 21.11.2018
(51) Int. Cl.: H04W 12/06, H04W 12/33, H04L 9/40, G06F 1/16

(54) **VERFAHREN ZUR AUTHENTIFIZIERUNG EINER DATENBRILLE IN EINEM DATENNETZ**
METHOD FOR THE AUTHENTICATION OF A PAIR OF DATA GLASSES IN A DATA NETWORK
PROCÉDÉ D'AUTHENTIFICATION DES LUNETTES INTELLIGENTES DANS UN RÉSEAU DE DONNÉES

(43) Veröffentlichungstag der Anmeldung: 27.05.2020
(73) Patentinhaber: TeamViewer Germany GmbH, 73033 Göppingen (DE)
(72) Erfinder: Holle, Henrik, 28857 Syke (DE); Witt, Hendrik, 28279 Bremen (DE); Eggert, Christoph, 28213 Bremen (DE)
(74) Vertreter: Fink Numrich Patentanwälte PartmbB

(56) Entgegenhaltungen:
- DE-A1-102014 011 853
- US-A1- 2014 310 531
- US-A1- 2016 150 406
- US-B1- 9 979 725

## Beschreibung

Die Erfindung betrifft ein Verfahren zur Authentifizierung einer Datenbrille in einem Datennetz sowie ein entsprechendes Authentifizierungssystem.

Datenbrillen kommen heutzutage in einer Vielzahl von technischen Anwendungsgebieten zum Einsatz. Unter einer Datenbrille ist hier und im Folgenden eine am Kopf eines Benutzers getragene Vorrichtung zu verstehen, welche eine Kommunikationsschnittstelle zum Empfang und Aussenden von Daten aufweist und welche ferner ein Ausgabemittel zur Ausgabe von Informationen für den Benutzer umfasst. Vorzugsweise ist das Ausgabemittel dabei ein visuelles Ausgabemittel. Dieses visuelle Ausgabemittel ist vorzugsweise ein Projektionsmodul, das Informationen auf einen transparenten Schirm der Datenbrille vor die Augen des Benutzers projiziert. Alternativ oder zusätzlich kann das Ausgabemittel jedoch auch eine andere Art von Ausgabe, wie z.B. eine akustische Ausgabe, generieren. Darüber hinaus kann eine Datenbrille ggf. auch eine Erfassungseinrichtung zur Erfassung der Umgebung aufweisen, in der sich der Benutzer mit der Datenbrille bewegt. Vorzugsweise wird als Erfassungseinrichtung eine Kamera verwendet.

Unter anderem werden Datenbrillen im Rahmen von Kommissioniervorgängen genutzt, bei denen einem Benutzer Informationen zu Lagerbeständen bzw. Handlungsanweisungen zur Entnahme bzw. zum Ablegen von Objekten gegeben werden. Ferner kommen Datenbrillen im Bereich der Benutzerassistenz im Rahmen der Inbetriebnahme bzw. Inspektion von technischen Anlagen zum Einsatz. Dabei werden dem Benutzer von einer entfernten Stelle Anweisungen zur Bedienung der Anlage gegeben.

Um eine Datenbrille in einer vorbestimmten Umgebung verwenden zu können, ist es in der Regel erforderlich, dass die Datenbrille Zugriff auf Dienste eines entsprechenden Datennetzes erhält, welches der vorgegebenen Umgebung zugeordnet ist. Hierfür ist es notwendig, dass sich der Benutzer der Datenbrille in dem Datennetz authentifiziert, um einen unberechtigten Zugriff auf das Datennetz zu vermeiden. Die Datenbrille stellt dabei in der Regel keine bzw. nur eine unzureichende Benutzerschnittstelle zur Durchführung einer solchen Authentifizierung bereit.

Aus den Dokumenten US 9,824,244 B1, US 2018/0019878 A1 sowie EP 3 107 022 A1 sind Authentifizierungsverfahren bekannt, bei denen vom Benutzer getragene Vorrichtungen (sog. Wearables) beteiligt sind. Dabei werden zumindest ein Teil der Authentifizierungs- bzw. Autorisierungsdaten von den Wearables bereitgestellt.

Aufgabe der Erfindung ist es, eine einfache Authentifizierung einer Datenbrille in einem Datennetz zu ermöglichen.

Die Druckschrift US 2016/150406 A1 zeigt ein Verfahren, bei dem im Rahmen der Authentifizierung eines Benutzers eine erste Vorrichtung und eine zweite Vorrichtung verwendet werden. Dabei werden dem Benutzer über die erste Vorrichtung eine erste Information und über die zweite Vorrichtung eine zweite Information angezeigt, so dass der Benutzer die Informationen auf Übereinstimmung überprüfen kann.

Die Druckschrift DE 10 2014 011 853 A1 betrifft ein Verfahren zum Durchführen einer Finanztransaktion an einem Transaktionsgerät. In dem Verfahren wird zunächst eine erste sichere Verbindung zwischen einer auf dem Kopf eines Nutzers angeordneten Anzeigevorrichtung und dem Transaktionsgerät hergestellt. Anschließend authentifiziert sich der Nutzer an dem Transaktionsgerät und führt die Transaktion durch.

Das Dokument US 2014/310531 A1 beschreibt ein Verfahren zum Eingeben von Authentisierungsdaten unter Verwendung eines Smartphones und einer Datenbrille. Die Authentisierungsdaten werden über eine Tastatur des Smartphones eingegeben. Die Korrelation der eingegebenen Zeichen mit den Tasten des Smartphones erfolgt über eine auf der Datenbrille angezeigte Tastatur, deren Belegung von der Tastatur des Smartphones abweicht.

Die Druckschrift US 9 979 725 B1 offenbart ein Authentifizierungsverfahren, bei dem ein zweidimensionaler Code auf einem Display angezeigt wird. Der Code kann durch ein mobiles Gerät eines Benutzers gescannt werden, woraufhin durch das mobile Gerät eine Authentifizierungsanfrage ausgesendet wird, über die sich der Benutzer bei einer entfernten Ressource authentifizieren kann.

Diese Aufgabe wird durch das Verfahren gemäß Patentanspruch 1 bzw. das Authentifizierungssystem gemäß Patentanspruch 12 gelöst. Weiterbildungen der Erfindung sind in den abhängigen Ansprüchen definiert.

Im erfindungsgemäßen Verfahren werden die nachfolgend erläuterten Schritte a) bis f) durchgeführt. In einem Schritt a) wird durch die Datenbrille eine Nachricht an einen Authentifizierungsrechner des Datennetzes mittels einer digitalen Datenübertragung im Datennetz übermittelt. Unter einer digitalen Datenübertragung ist hier und im Folgenden eine Datenübertragung ausschließlich über Kommunikationspfade zu verstehen, auf denen Informationen als digitale Signale codiert sind. Vorzugsweise wird die Übermittlung der Nachricht über eine Bedienung (d.h. eine oder mehrere durch einen Benutzer durchgeführte Bedienaktionen) an der Datenbrille oder an einem anderen Kommunikationsgerät ausgelöst.

In einem Schritt b) des erfindungsgemäßen Verfahrens generiert der Authentifizierungsrechner in Reaktion auf die übermittelte Nachricht einen ersten Transaktionscode und übermittelt diesen wiederum mittels einer digitalen Datenübertragung im Datennetz an die Datenbrille. Vorzugsweise wird hierbei der gleiche Übertragungspfad wie im Schritt a) genutzt.

In einem Schritt c) des erfindungsgemäßen Verfahrens werden Autorisierungsdaten eines Benutzers in Reaktion auf einen ersten Bedienvorgang an einem nicht zur Datenbrille gehörigen Terminal ohne Zwischenschaltung der Datenbrille in das Datennetz eingelesen. Der erste Bedienvorgang und auch der weiter unten genannte zweite Bedienvorgang umfassen eine oder mehrere Bedienaktionen, die durch einen Benutzer am Terminal ausgeführt werden. Vorzugsweise wird eine Ausgabe an dem Terminal generiert, welche dem Benutzer zu dem ersten Bedienvorgang am Terminal auffordert. Die eingelesenen Autorisierungsdaten werden vom Authentifizierungsrechner verarbeitet. Dabei führt der Authentifizierungsrechner eine Authentifizierung des Benutzers basierend auf den Autorisierungsdaten durch, wobei im Rahmen der Authentifizierung neben den Autorisierungsdaten überprüft wird, ob ein während der Authentifizierung übertragener Code, der auf einem unabhängigen Gerät des Benutzers angezeigt wird, in das Terminal eingegeben wird. Unter einem Terminal ist ein Gerät und vorzugsweise ein stationäres Gerät zu verstehen, das eine entsprechende Benutzerschnittstelle für Bedienvorgänge eines Benutzers umfasst. In einer bevorzugten Variante ist das Terminal Teil des oben definierten Authentifizierungsrechners. Nichtsdestotrotz kann der Authentifizierungsrechner auch ein Rechner sein, an dem kein Terminal vorgesehen ist. In diesem Fall kommuniziert das Terminal mit dem Authentifizierungsrechner über das Datennetz.

In einem Schritt d) des erfindungsgemäßen Verfahrens liest das Terminal im Falle einer erfolgreichen Authentifizierung des Benutzers in Reaktion auf einen zweiten Bedienvorgang einen zweiten Transaktionscode in das Datennetz ein, der dem Authentifizierungsrechner bereitgestellt wird. Vorzugsweise wird dabei eine Ausgabe an dem Terminal generiert, welche dem Benutzer zu dem zweiten Bedienvorgang am Terminal auffordert.

Anschließend überprüft der Authentifizierungsrechner in Schritt e), ob der zweite Transaktionscode mit dem ersten Transaktionscode übereinstimmt. Ist dies der Fall, wird in Schritt f) eine Zugangsberechtigung von dem Authentifizierungsrechner für die Datenbrille bereitgestellt und in der Datenbrille gespeichert, wobei die Zugangsberechtigung den Zugriff der Datenbrille auf einen oder mehrere vorbestimmte Dienste in dem Datennetz ermöglicht. Der oder die Dienste können beliebig ausgestaltet sein. In einer Variante kann ein Dienst ein Verzeichnisdienst sein, z.B. basierend auf Microsoft Active Directory oder LDAP (LDAP = Lightweight Directory Access Protocol).

Das erfindungsgemäße Verfahren ermöglicht eine sog. SSO-Authentifizierung (SSO = Single Sign-On) einer Datenbrille, gemäß der über eine einmalige Authentifizierung eines Benutzers bestimmte Dienste im Datennetz ohne nochmalige Authentifizierung genutzt werden können. Hierfür muss von der Datenbrille lediglich die gespeicherte Zugangsberechtigung zum Zugriff auf den entsprechenden Dienst bereitgestellt werden. Üblicherweise ist diese Zugangsberechtigung ein sog. SSO-Token. Es sind aus dem Stand der Technik verschiedene Varianten solcher Token bekannt, die auch im Rahmen des erfindungsgemäßen Verfahrens verwendet werden können (z.B. SAML, jwt oder OAuth).

Das erfindungsgemäße Verfahren hat den Vorteil, dass eine einfache Authentifizierung einer Datenbrille unter Zwischenschaltung eines Bedienvorgangs an einem Terminal ermöglicht wird, das nicht zur Datenbrille gehört. Mit anderen Worten wird die Bereitstellung von Autorisierungsdaten von der Datenbrille auf ein anderes Gerät verlagert. Die Verknüpfung der Authentifizierung mit der entsprechenden Datenbrille wird dabei mit Hilfe eines Transaktionscodes erreicht, der an die Datenbrille übertragen wird.

Um die Sicherheit des Verfahrens zu verbessern, werden im erfindungsgemäßen Verfahren die Autorisierungsdaten im Rahmen einer an sich bekannten Multi-Faktor-Authentifizierung bereitgestellt werden. Bei dieser Authentifizierung werden mehrere unabhängige Authentifizierungsmerkmale verwendet.

Vorzugsweise umfasst die Zugangsberechtigung als Informationen, welche bei Verwendung der Zugangsberechtigung zum Zugriff der Datenbrille auf den oder die vorbestimmten Dienste zu prüfen sind, eine vorgegebene Gültigkeitsdauer und/oder eine Signatur. Mit anderen Worten wird der Zugriff auf den entsprechenden Dienst nur dann gewährt, wenn die vorgegebene Gültigkeitsdauer nicht abgelaufen ist bzw. die Signatur erfolgreich verifiziert werden kann.

In einer bevorzugten Variante erfolgt in dem erfindungsgemäßen Verfahren jede Datenübertragung im Datennetz zwischen Datenbrille und Authentifizierungsrechner verschlüsselt, wobei hierzu gängige Verschlüsselungsverfahren genutzt werden können. Hierdurch wird die Sicherheit des Verfahrens erhöht. Darüber hinaus erfolgt jede digitale Datenübertragung im Datennetz zwischen Datenbrille und Authentifizierungsrechner vorzugsweise unter Verwendung einer drahtlosen Kommunikationseinheit der Datenbrille. Mit anderen Worten wird zum Datenaustausch mit der Datenbrille immer ein drahtloser Kommunikationspfad hin und weg von der Datenbrille genutzt. Hierdurch wird das Verfahren vereinfacht.

In einer weiteren bevorzugten Ausgestaltung umfasst der erste Bedienvorgang in Schritt c) des erfindungsgemäßen Verfahrens eine manuelle Eingabe von Daten durch einen Benutzer, wobei der Benutzer hierfür vorzugsweise eine Tastatur und/oder die Bedienung eines Cursors auf einem Bildschirm nutzt. Die manuell eingegebenen Daten stellen dabei zumindest einen Teil der eingelesenen Autorisierungsdaten dar. Mit dieser Variante der Erfindung kann eine bedienerfreundliche Eingabe von Autorisierungsdaten erreicht werden. Die Tastatur muss dabei nicht zwangsläufig aus einzeln ausgebildeten Tasten bestehen, sondern sie kann ggf. auch auf einem berührungssensitiven Bildschirm (als virtuelle Tastatur) bereitgestellt sein. Vorzugsweise umfassen die manuell eingegebenen Daten einen Benutzernamen und ein Passwort. Gegebenenfalls können die manuell eingegebenen Daten auch noch weitere Informationen, wie z.B. eine Domäne, umfassen.

In einer weiteren Variante des erfindungsgemäßen Verfahrens umfasst der erste Bedienvorgang in Schritt c) die Bereitstellung von biometrischen Daten und/oder Daten eines tragbaren Datenträgers durch einen Benutzer, wobei die bereitgestellten biometrischen Daten bzw. die bereitgestellten Daten eines tragbaren Datenträgers zumindest einen Teil der eingelesenen Autorisierungsdaten darstellen. Bei den biometrischen Daten kann es sich z.B. um einen Fingerabdruck oder um das Gesicht eines Benutzers handeln. Diese Daten können über entsprechende Sensorik (Fingerabdrucksensor, Kamera und dergleichen) eingelesen werden. Zur Bereitstellung der Daten eines tragbaren Datenträgers lässt der Benutzer den entsprechenden Datenträger über eine kontaktlose bzw. kontaktbehaftete Schnittstelle mit dem Terminal kommunizieren.

In einer weiteren, besonders bevorzugten Ausführungsform wird in Schritt b) der erste Transaktionscode an der Datenbrille über ein Ausgabemittel, insbesondere ein visuelles und/oder akustisches Ausgabemittel, für einen Benutzer ausgegeben, wobei in Schritt d) der zweite Bedienvorgang eine manuelle Benutzereingabe eines Codes ist, der als zweiter Transaktionscode in das Datennetz eingelesen wird. Mit anderen Worten kann ein Benutzer einen Zugriff auf die Dienste mittels der Datenbrille dadurch erhalten, dass er den über das Ausgabemittel ausgegebenen Transaktionscode im Rahmen des zweiten Bedienvorgangs eingibt. Hierdurch wird eine besonders einfache Authentifizierung der Datenbrille ermöglicht. Gegebenenfalls ist es jedoch auch möglich, dass der erste Transaktionscode in einem Speicher der Datenbrille hinterlegt ist, wobei dieser Speicher, ausgelöst durch einen entsprechenden zweiten Bedienvorgang, ausgelesen wird, z.B. indem die Datenbrille mit einer (kontaktlosen oder kontaktbehafteten) Schnittstelle am Terminal verbunden wird.

In einer Variante des erfindungsgemäßen Verfahrens wird die Zugangsberechtigung in Schritt f) von dem Authentifizierungsrechner an die Datenbrille über eine digitale Datenübertragung im Datennetz übermittelt. Alternativ ist es auch möglich, dass die Zugangsberechtigung am Terminal als analoger Code ausgegeben wird, wobei der ausgegebene analoge Code digitalisiert und in der Datenbrille gespeichert wird. Vorzugsweise ist der analoge Code dabei ein visueller Code, der über ein Einscannen digitalisiert wird. Das Einscannen erfolgt vorzugsweise durch eine Erfassungseinrichtung der Datenbrille, wie z.B. eine Kamera. Der visuelle Code ist vorzugsweise ein an sich bekannter QR-Code.

Neben dem oben beschriebenen Verfahren betrifft die Erfindung ein Authentifizierungssystem für ein Datennetz, umfassend eine Datenbrille, einen Authentifizierungsrechner und ein Terminal, welche derart ausgestaltet sind, dass sie bei Betrieb im Datennetz das erfindungsgemäße Verfahren bzw. eine oder mehrere bevorzugte Varianten des erfindungsgemäßen Verfahrens durchführen.

Ausführungsbeispiele der Erfindung werden nachfolgend anhand der beigefügten Figuren detailliert beschrieben.

Es zeigen:

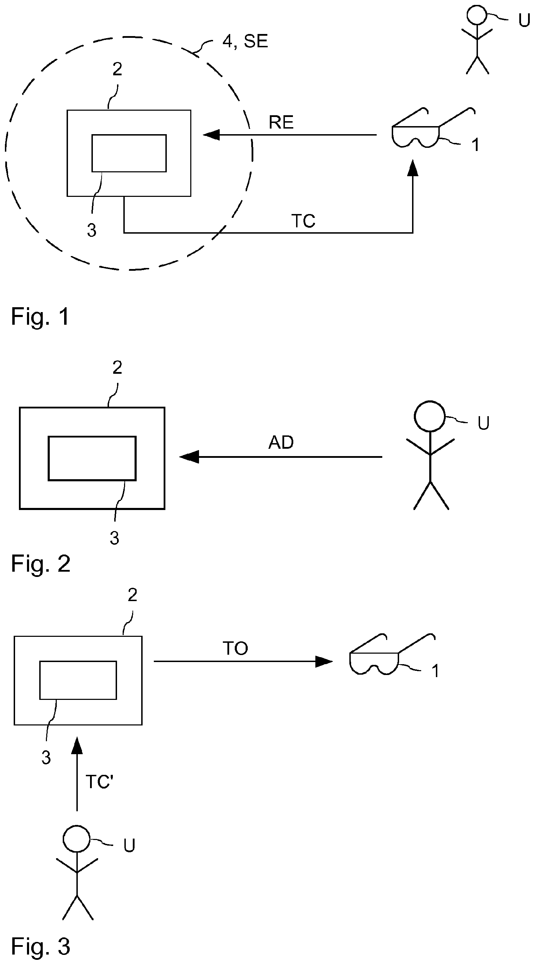

- Fig. 1 bis Fig. 3: schematische Darstellungen, welche den Ablauf einer Variante des erfindungsgemäßen Verfahrens verdeutlichen.

Nachfolgend wird eine Variante des erfindungsgemäßen Verfahrens anhand einer Datenbrille 1 beschrieben, über die ein Benutzer U Zugriff auf vorbestimmte Dienste SE eines Datennetzes 4 erhalten möchte. Das Datennetz 4 ist in Fig. 1 lediglich schematisch durch einen gestrichelten Kreis angedeutet. Im hier gezeigten Ausführungsbeispiel umfasst die Datenbrille 1 neben einer drahtlosen Kommunikationseinheit, über welche mit dem Datennetz 4 kommuniziert werden kann, eine visuelle Ausgabeeinheit, über welche dem Benutzer mittels einer Projektion auf die Gläser der Datenbrille Informationen angezeigt werden.

Bei dem Datennetz 4 handelt es sich um eine abgeschlossene IT-Infrastruktur. Beispielsweise kann es sich um ein Netzwerk des Betreibers einer technischen Anlage handeln, wobei der Benutzer U Zugriff auf bestimmte Komponenten der Anlage bzw. auf entsprechende Informationen dieser Komponenten mittels der Datenbrille haben möchte. In einer Variante kann die technische Anlage ein Lagerhaltungssystem sein, in dem Objekte im Rahmen einer Kommissionierung durch den Benutzer an entsprechenden Lagerorten abgelegt bzw. dort entnommen werden. Der Benutzer kann dabei über die Datenbrille 1 Informationen zu entsprechenden Lagerbeständen bzw. Handlungsanweisungen zur Entnahme bzw. Ablage von Objekten erhalten.

Damit der Benutzer U seine Datenbrille 1 für entsprechende Dienste verwenden kann, muss er sich zunächst erfolgreich in dem Datennetz 4 für die Datenbrille 1 authentifizieren bzw. autorisieren. Im Rahmen der Erfindung wird diese Authentifizierung nicht über eine Benutzerschnittstelle der Datenbrille 1, sondern über ein Terminal 3 durchgeführt. Im hier beschriebenen Ausführungsbeispiel handelt es sich bei dem Terminal 3, welches lediglich schematisch angedeutet ist, um einen Bildschirm sowie eine Tastatur, über welche der Benutzer U manuell Daten eingeben kann.

An der Authentifizierung ist ferner ein Authentifizierungsrechner 2 beteiligt, der zum Datennetz 4 gehört. Im hier beschriebenen Ausführungsbeispiel ist das Terminal 3 Bestandteil des Authentifizierungsrechners 2, was jedoch nicht zwangsläufig erforderlich ist. Vielmehr ist es auch möglich, dass der Authentifizierungsrechner ein anderer Rechner als der Rechner ist, an dem das Terminal 3 vorgesehen ist. In diesem Fall können das Terminal 3 und der Authentifizierungsrechner 2 über das Datennetz 4 miteinander kommunizieren.

Der Authentifizierungsprozess wird durch den Benutzer U an der Datenbrille 1 gestartet, z.B. indem der Benutzer eine Taste an der Brille drückt. Anschließend wird eine Nachricht RE drahtlos von der Datenbrille 1 ausgesendet und an den Authentifizierungsrechner 2 übermittelt, wie aus Fig. 1 ersichtlich ist. Mit dieser Nachricht wird ein Transaktionscode bzw. Transaktionstoken TC von dem Authentifizierungsrechner 2 angefordert. Als Folge übermittelt der Authentifizierungsrechner 2 den Transaktionscode TC über das Datennetz 4 an die Datenbrille 1, so dass dieser Transaktionscode drahtlos von der Datenbrille empfangen wird (siehe Fig.1).

Der Transaktionscode wird anschließend über die visuelle Ausgabeeinheit der Datenbrille 1 angezeigt. Der Transaktionscode besteht im hier beschriebenen Ausführungsbeispiel aus einer vorbestimmten Anzahl von Zeichen, welche Buchstaben und/oder Nummern enthalten können. Beispielsweise kann der Transaktionscode ein sechsstelliger numerischer Code sein. Der Transaktionscode dient als temporäres eindeutiges Merkmal des konkreten Autorisierungs- bzw. Authentifizierungsvorgangs durch den Benutzer für die Datenbrille 1 und wird zur Übermittlung einer Zugangsberechtigung an die Datenbrille benötigt, wie weiter unten anhand von Fig. 3 beschrieben wird.

Nach Übermittlung des Transaktionscodes TC an der Datenbrille 1 wechselt der Benutzer U an den Terminal 3 des Authentifizierungsrechners 2, was aus Fig. 2 ersichtlich ist. Dort wird er zur Eingabe von Autorisierungsdaten bzw. Autorisierungsmerkmalen AD aufgefordert. Diese Merkmale können beispielsweise die Kombination aus einer Domäne, einem Benutzernamen und einem Passwort darstellen. Die Autorisierungsdaten AD werden über die Tastatur des Terminals 3 von dem Benutzer U händisch eingegeben. Es kann somit eine bedienerfreundliche Benutzerschnittstelle zur Eingabe dieser Autorisierungsdaten genutzt werden. Die Datenbrille 1 verfügt nicht über eine solche bedienerfreundliche Benutzerschnittstelle.

Der Authentifizierungsrechner 2 führt anschließend eine Authentifizierung basierend auf den eingegebenen Autorisierungsdaten AD durch. Beispielsweise wird überprüft, ob für eine eingegebene Domäne und einen eingegebenen Benutzernamen das richtige Passwort eingegeben wurde. Gegebenenfalls können die Autorisierungsdaten noch weitere Autorisierungsmerkmale umfassen, z.B. kann es erforderlich sein, dass zusätzlich Autorisierungsdaten von einer dem Benutzer zugeordneten Smartcard eingelesen werden müssen. Ferner ist die Authentifizierung als Multi-Faktor-Authentifizierung ausgestaltet, bei der über ein unabhängiges Gerät weitere Authentifizierungs- bzw. Autorisierungsmerkmale empfangen werden. Dabei ist es erforderlich, dass ein während der Authentifizierung übertragener Code, der auf einem mobilen Endgerät des Benutzers angezeigt wird, zusätzlich in das Terminal eingegeben werden muss.

Ist die Authentifizierung des Benutzers U erfolgreich, wird im Hintergrund automatisiert durch den Authentifizierungsrechner 2 ein sog. SSO-Token generiert, der auch als SSO-Ticket bezeichnet wird. Der Token kann dabei auf an sich bekannten Technologien basieren, z.B. SAML, jwt oder OAuth. Der Token bleibt zunächst beim Authentifizierungsrechner 2.

In einem nächsten Schritt, der in Fig. 3 wiedergegeben ist, wird der Benutzer U nach erfolgreicher Authentifizierung aufgefordert, einen Transaktionscode TC' wiederum über die Tastatur des Terminals 3 einzugeben. Nur im Falle, dass der Transaktionscode TC' mit dem visuell an der Datenbrille 1 ausgegebenen Transaktionscode TC übereinstimmt, wird der SSO-Token TO an die Datenbrille 1 übertragen. Der Token ermöglicht den Zugriff auf die vorbestimmten Dienste SE des Datennetzes 4. Möchte der Benutzer einen solchen Dienst nutzen, veranlasst er die Übermittlung des auf der Datenbrille hinterlegten Tokens TO an den entsprechenden Dienst, der den Token dann verifiziert. Nach erfolgreicher Verifikation kann der Dienst genutzt werden.

In der Ausführungsform der Fig. 3 wird der Token TO in digitaler Form über das Datennetz 4 übertragen. Alternativ ist es auch möglich, dass der Token TO auf dem Bildschirm des Terminals 3 angezeigt wird, woraufhin er über ein Einscannen digitalisiert und der Datenbrille bereitgestellt wird. Beispielsweise kann der Code als QR-Code auf dem Bildschirm angezeigt werden, woraufhin der QR-Code durch den Benutzer mit einer Kamera der Datenbrille erfasst wird. In der Datenbrille wird der erfasste Code dann in entsprechende digitale Daten gewandelt.

Die im Vorangegangenen beschriebene Ausführungsform der Erfindung weist eine Reihe von Vorteilen auf. Insbesondere kann eine Authentifizierung eines Benutzers für die ihm zugeordnete Datenbrille an einem separaten Terminal vorgenommen werden, ohne dass eine Benutzerschnittstelle der Datenbrille genutzt werden muss. Auf diese Weise kann eine bedienerfreundliche Eingabe von Autorisierungsdaten erreicht werden. Mit anderen Worten wird die Eingabe von Autorisierungsdaten von der Datenbrille auf ein anderes Gerät in der Form eines Terminals verlagert, wobei eine Zuordnung der Autorisierungsdaten zu der Datenbrille über die Eingabe eines Transaktionscodes erfolgt, der zuvor an der Datenbrille ausgegeben wurde.

## Patentansprüche

1. Verfahren zur Authentifizierung einer Datenbrille (1) in einem Datennetz (4), bei dem:
a) durch die Datenbrille (1) eine Nachricht (RE) an einen Authentifizierungsrechner (2) des Datennetzes (4) mittels einer digitalen Datenübertragung im Datennetz (4) übermittelt wird;
b) der Authentifizierungsrechner (2) in Reaktion auf die übermittelte Nachricht (RE) einen ersten Transaktionscode (TC) generiert und mittels einer digitalen Datenübertragung im Datennetz (4) an die Datenbrille (1) übermittelt;
c) Autorisierungsdaten (AD) eines Benutzers (U) in Reaktion auf einen ersten Bedienvorgang an einem nicht zur Datenbrille (1) gehörigen Terminal (3) ohne Zwischenschaltung der Datenbrille (1) in das Datennetz (4) eingelesen werden und vom Authentifizierungsrechner (2) verarbeitet werden, der eine Authentifizierung des Benutzers (U) basierend auf den Autorisierungsdaten (AD) durchführt, wobei im Rahmen der Authentifizierung neben den Autorisierungsdaten (AD) überprüft wird, ob ein während der Authentifizierung übertragener Code, der auf einem unabhängigen Gerät des Benutzers angezeigt wird, in das Terminal (3) eingegeben wird;
d) im Falle einer erfolgreichen Authentifizierung des Benutzers (U) ein zweiter Transaktionscode (TC') in Reaktion auf einen zweiten Bedienvorgang am Terminal (3) in das Datennetz (4) eingelesen wird und dem Authentifizierungsrechner (2) bereitgestellt wird;
e) der Authentifizierungsrechner (2) überprüft, ob der zweite Transaktionscode (TC') mit dem ersten Transaktionscode (TC) übereinstimmt;
f) falls die Überprüfung in Schritt e) ergibt, dass der zweite Transaktionscode (TC') mit dem ersten Transaktionscode (TC) übereinstimmt, eine Zugangsberechtigung (TO) von dem Authentifizierungsrechner (2) für die Datenbrille (1) bereitgestellt und in der Datenbrille (1) gespeichert wird, wobei die Zugangsberechtigung (TO) den Zugriff der Datenbrille (1) auf einen oder mehrere vorbestimmte Dienste (SE) in dem Datennetz (4) ermöglicht.

2. Verfahren nach Anspruch 1, wobei die Zugangsberechtigung (TO) als Informationen, welche bei Verwendung der Zugangsberechtigung (TO) zum Zugriff der Datenbrille (1) auf den oder die vorbestimmten Dienste (SE) zu prüfen sind, eine vorgegebene Gültigkeitsdauer und/oder eine Signatur umfasst.

3. Verfahren nach Anspruch 1 oder 2, wobei die Übermittlung der Nachricht (RE) in Schritt a) über eine Bedienung an der Datenbrille (1) oder an einem anderen Kommunikationsgerät ausgelöst wird.

4. Verfahren nach einem der vorhergehenden Ansprüche, wobei jede digitale Datenübertragung im Datennetz (4) zwischen Datenbrille (1) und Authentifizierungsrechner (2) verschlüsselt und/oder unter Verwendung einer drahtlosen Kommunikationseinheit der Datenbrille (1) erfolgt.

5. Verfahren nach einem der vorhergehenden Ansprüche, wobei der erste Bedienvorgang in Schritt c) eine manuelle Eingabe von Daten durch einen Benutzer (U) umfasst, wobei die manuell eingegebenen Daten zumindest einen Teil der eingelesenen Autorisierungsdaten (AD) darstellen.

6. Verfahren nach einem der vorhergehenden Ansprüche, wobei der erste Bedienvorgang in Schritt c) die Bereitstellung von biometrischen Daten und/oder Daten eines tragbaren Datenträges durch einen Benutzer (U) umfasst, wobei diese bereitgestellten Daten zumindest einen Teil der eingelesenen Autorisierungsdaten (AD) darstellen.

7. Verfahren nach einem der vorhergehenden Ansprüche, wobei die Autorisierungsdaten (AD) in Schritt c) im Rahmen einer Multi-Faktor-Authentifizierung bereitgestellt werden.

8. Verfahren nach einem der vorhergehenden Ansprüche, wobei in Schritt b) der erste Transaktionscode (TC) an der Datenbrille (1) über ein Ausgabemittel, insbesondere ein visuelles und/oder akustisches Ausgabemittel, für einen Benutzer (U) ausgegeben wird, wobei in Schritt d) der zweite Bedienvorgang eine manuelle Eingabe eines Codes ist, der als zweiter Transaktionscode (TC') in das Datennetz (4) eingelesen wird.

9. Verfahren nach einem der vorhergehenden Ansprüche, wobei der Authentifizierungsrechner (2) ein Rechner ist, an dem das Terminal (3) vorgesehen ist.

10. Verfahren nach einem der vorhergehenden Ansprüche, wobei die Zugangsberechtigung (TO) von dem Authentifizierungsrechner (2) an die Datenbrille (1) über eine digitale Datenübertragung im Datennetz (4) übermittelt wird.

11. Verfahren nach einem der Ansprüche 1 bis 9, wobei die Zugangsberechtigung (TO) am Terminal (3) als analoger Code ausgegeben wird, wobei der ausgegebene analoge Code digitalisiert und in der Datenbrille (1) gespeichert wird, wobei der analoge Code vorzugsweise ein visueller Code ist, der am Terminal angezeigt wird und über ein Einscannen digitalisiert wird.

12. Authentifizierungssystem für ein Datennetz (4), umfassend eine Datenbrille (1), einen Authentifizierungsrechner (2) und ein Terminal (3), welche derart ausgestaltet sind, dass sie bei Betrieb im Datennetz (4) ein Verfahren durchführen, bei dem:
a) durch die Datenbrille (1) eine Nachricht (RE) an einen Authentifizierungsrechner (2) des Datennetzes (4) mittels einer digitalen Datenübertragung im Datennetz (4) übermittelt wird;
b) der Authentifizierungsrechner (2) in Reaktion auf die übermittelte Nachricht (RE) einen ersten Transaktionscode (TC) generiert und mittels einer digitalen Datenübertragung im Datennetz (4) an die Datenbrille (1) übermittelt;
c) Autorisierungsdaten (AD) eines Benutzers (U) in Reaktion auf einen ersten Bedienvorgang an einem nicht zur Datenbrille (1) gehörigen Terminal (3) ohne Zwischenschaltung der Datenbrille (1) in das Datennetz (4) eingelesen werden und vom Authentifizierungsrechner (2) verarbeitet werden, der eine Authentifizierung des Benutzers (U) basierend auf den Autorisierungsdaten (AD) durchführt, wobei im Rahmen der Authentifizierung neben den Autorisierungsdaten (AD) überprüft wird, ob ein während der Authentifizierung übertragener Code, der auf einem unabhängigen Gerät des Benutzers angezeigt wird, in das Terminal (3) eingegeben wird;
d) im Falle einer erfolgreichen Authentifizierung des Benutzers (U) ein zweiter Transaktionscode (TC') in Reaktion auf einen zweiten Bedienvorgang am Terminal (3) in das Datennetz (4) eingelesen wird und dem Authentifizierungsrechner (2) bereitgestellt wird;
e) der Authentifizierungsrechner (2) überprüft, ob der zweite Transaktionscode (TC') mit dem ersten Transaktionscode (TC) übereinstimmt;
f) falls die Überprüfung in Schritt e) ergibt, dass der zweite Transaktionscode (TC') mit dem ersten Transaktionscode (TC) übereinstimmt, eine Zugangsberechtigung (TO) von dem Authentifizierungsrechner (2) für die Datenbrille (1) bereitgestellt und in der Datenbrille (1) gespeichert wird, wobei die Zugangsberechtigung (TO) den Zugriff der Datenbrille (1) auf einen oder mehrere vorbestimmte Dienste (SE) in dem Datennetz (4) ermöglicht.

13. Authentifizierungssystem für ein Datennetz (4) nach Anspruch 12, welches zur Durchführung eines Verfahrens nach einem der Ansprüche 2 bis 11 eingerichtet ist.

## Claims

1. A method for authenticating data glasses (1) in a data network (4), in which:
a) a message (RE) is transmitted by the data glasses (1) to an authentication computer (2) of the data network (4) by means of a digital data transmission in the data network (4);
b) the authentication computer (2) generates a first transaction code (TC) in response to the transmitted message (RE) and transmits it to the data glasses (1) by means of a digital data transmission in the data network (4);
c) authorization data (AD) of a user (U) in response to a first user operation at a terminal (3) not belonging to the data glasses (1) are read into the data network (4) without participation of the data glasses (1) and are processed by the authentication computer (2) which carries out an authentication of the user (U) based on the authorization data (AD), wherein in the course of the authentication, in addition to the authorization data (AD), it is checked whether a code transmitted during the authentication and displayed on an independent device of the user is entered into the terminal (3);
d) in case of a successful authentication of the user (U), a second transaction code (TC') is read into the data network (4) in response to a second user operation at the terminal (3) and is provided to the authentication computer (2);
e) the authentication computer (2) checks whether the second transaction code (TC') matches the first transaction code (TC);
f) if the check in step e) shows that the second transaction code (TC') matches the first transaction code (TC), an access authorization (TO) is provided by the authentication computer (2) for the data glasses (1) and stored in the data glasses (1), the access authorization (TO) enabling the data glasses (1) to access one or more predetermined services (SE) in the data network (4).

2. The method according to claim 1, wherein the access authorization (TO) comprises a predetermined validity period and/or a signature as information to be checked when using the access authorization (TO) to access the data glasses (1) to the predetermined service or services (SE).

3. The method according to claim 1 or 2, wherein the transmission of the message (RE) in step a) is triggered via a user operation on the data glasses (1) or on another communication device.

4. The method according to one of the preceding claims, wherein each digital data transmission in the data network (4) between the data glasses (1) and the authentication computer (2) takes place encrypted and/or using a wireless communication unit of the data glasses (1).

5. The method according to one of the preceding claims, wherein the first user operation in step c) comprises a manual input of data by a user (U), wherein the manually input data represent at least a part of the read-in authorization data (AD).

6. The method according to one of the preceding claims, wherein the first user operation in step c) comprises the provision of biometric data and/or data of a portable data carrier by a user (U), said provided data representing at least a part of the read-in authorization data (AD).

7. The method according to one of the preceding claims, wherein the authorization data (AD) in step c) are provided in the course of a multi-factor authentication.

8. The method according to one of the preceding claims, wherein in step b) the first transaction code (TC) is output for a user (U) at the data glasses (1) via an output means, in particular a visual and/or acoustic output means, wherein in step d) the second user operation is a manual input of a code which is read into the data network (4) as a second transaction code (TC').

9. The method according to one of the preceding claims, wherein the authentication computer (2) is a computer on which the terminal (3) is provided.

10. The method according to one of the preceding claims, wherein the access authorization (TO) is transmitted from the authentication computer (2) to the data glasses (1) via a digital data transmission in the data network (4).

11. The method according to one of claims 1 to 9, wherein the access authorization (TO) is output at the terminal (3) as an analog code, wherein the output analog code is digitized and stored in the data glasses (1), wherein the analog code is preferably a visual code that is displayed at the terminal and is digitized via scanning.

12. An authentication system for a data network (4), comprising data glasses (1), an authentication computer (2) and a terminal (3), which are configured such that, during operation in the data network (4), they perform a method in which:
a) a message (RE) is transmitted by the data glasses (1) to an authentication computer (2) of the data network (4) by means of a digital data transmission in the data network (4);
b) the authentication computer (2) generates a first transaction code (TC) in response to the transmitted message (RE) and transmits it to the data glasses (1) by means of a digital data transmission in the data network (4);
c) authorization data (AD) of a user (U) are read into the data network (4) in response to a first user operation at a terminal (3) not belonging to the data glasses (1) without participation of the data glasses (1) and are processed by the authentication computer (2), which carries out an authentication of the user (U) based on the authorization data (AD), wherein in the course of the authentication, in addition to the authorization data (AD), it is checked whether a code transmitted during the authentication and displayed on an independent device of the user is entered into the terminal (3);
d) in case of a successful authentication of the user (U), a second transaction code (TC') is read into the data network (4) in response to a second operation at the terminal (3) and is provided to the authentication computer (2);
e) the authentication computer (2) checks whether the second transaction code (TC') matches the first transaction code (TC);
f) if the check in step e) shows that the second transaction code (TC') matches the first transaction code (TC), an access authorization (TO) is provided by the authentication computer (2) for the data glasses (1) and stored in the data glasses (1), whereby the access authorization (TO) enabling access of the data glasses (1) to one or more predetermined services (SE) in the data network (4).

13. The authentication system for a data network (4) according to claim 12, which configured to perform a method according to one of claims 2 to 11.

## Revendications

1. Procédé d'authentification de lunettes intelligentes (1) dans un réseau de données (4), lors duquel :
a) un message (RE) est transmis par les lunettes intelligentes (1) à un ordinateur d'authentification (2) du réseau de données (4) au moyen d'un transfert de données numérique dans le réseau de données (4) ;
b) l'ordinateur d'authentification (2) génère en réaction au message transmis (RE) un premier code de transaction (TC) et le transmet au moyen d'un transfert de données numérique dans le réseau de données (4) aux lunettes intelligentes (1) ;
c) des données d'autorisation (AD) d'un utilisateur (U) sont lues en réaction à un premier processus de commande sur un terminal (3) n'appartenant pas aux lunettes intelligentes (1) sans interposition des lunettes intelligentes (1) dans le réseau de donnés (4) et sont traitées par l'ordinateur d'authentification (2) qui exécute une authentification de l'utilisateur (U) en se basant sur les données d'autorisation (AD), dans lequel dans le cadre de l'authentification, outre les données d'autorisation (AD), il est vérifié si un code transféré pendant l' authentification qui est affiché sur un appareil indépendant de l'utilisateur est entré dans le terminal (3) ;
d) dans le cas d'une authentification réussie de l'utilisateur (U), un second code de transaction (TC') est lu en réaction à un second processus de commande sur le terminal (3) dans le réseau de données (4) et est mis à disposition de l'ordinateur d'authentification (2) ;
e) l'ordinateur d'authentification (2) vérifie si le second code de transaction (TC') concorde avec le premier code de transaction (TC) ;
f) au cas où la vérification à l'étape e) révèle que le second code de transaction (TC') concorde avec le premier code de transaction (TC), une autorisation d'accès (TO) de l'ordinateur d'authentification (2) est mise à disposition pour les lunettes intelligentes (1) et mémorisée dans les lunettes intelligentes (1), dans lequel l'autorisation d'accès (TO) permet l'accès des lunettes intelligentes (1) à un ou plusieurs services prédéterminés (SE) dans le réseau de données (4).

2. Procédé selon la revendication 1, dans lequel l'autorisation d'accès (TO) comprend en tant qu'informations qui sont à vérifier lors de l'utilisation de l'autorisation d'accès (TO) pour l'accès des lunettes intelligentes (1) au ou aux services prédéterminés (SE) une durée de validité prédéfinie et/ou une signature.

3. Procédé selon la revendication 1 ou 2, dans lequel la transmission du message (RE) à l'étape a) est déclenchée par une manipulation sur les lunettes intelligentes (1) ou sur un autre appareil de communication.

4. Procédé selon une des revendications précédentes, dans lequel chaque transfert de données numérique dans le réseau de données (4) entre lunettes intelligentes (1) et ordinateur d'authentification (2) est chiffré et/ou s'effectue en utilisant un module de communication sans fil des lunettes intelligentes (1).

5. Procédé selon une des revendications précédentes, dans lequel le premier processus de commande à l'étape c) comprend une entrée manuelle de données par un utilisateur (U), dans lequel les données entrées manuellement représentent au moins une partie des données d'autorisation lues (AD).

6. Procédé selon une des revendications précédentes, dans lequel le premier processus de commande à l'étape c) comprend la mise à disposition de données biométriques et/ou de données d'un support de données portable par un utilisateur (U), dans lequel ces données mises à disposition représentent au moins une partie des données d'autorisation lues (AD).

7. Procédé selon une des revendications précédentes, dans lequel les données d'autorisation (AD) à l'étape c) sont mises à disposition dans le cadre d'une authentification multifactorielle.

8. Procédé selon une des revendications précédentes, dans lequel à l'étape b), le premier code de transaction (TC) est sorti au niveau des lunettes intelligentes (1) par le biais d'un moyen de sortie, notamment d'un moyen de sortie visuel et/ou acoustique, pour l'utilisateur (U), dans lequel à l'étape d), le second processus de commande est une entrée manuelle d'un code qui est lu en tant que second code de transaction (TC') dans le réseau de données (4).

9. Procédé selon une des revendications précédentes, dans lequel l'ordinateur d'authentification (2) est un ordinateur sur lequel est prévu le terminal (3).

10. Procédé selon une des revendications précédentes, dans lequel l'autorisation d'accès (TO) est transmise de l'ordinateur d'authentification (2) aux lunettes intelligentes (1) par le biais d'un transfert de données numérique dans le réseau de données (4).

11. Procédé selon une des revendications 1 à 9, dans lequel l'autorisation d'accès (TO) est sortie sur le terminal (3) en tant que code analogique, dans lequel le code analogique sorti est numérisé et mémorisé dans les lunettes intelligentes (1), dans lequel le code analogique est de préférence un code visuel qui est affiché sur le terminal et est numérisé par le biais d'un scannage.

12. Système d'authentification pour un réseau de données (4), comprenant des lunettes intelligentes (1), un ordinateur d'authentification (2) et un terminal (3), qui sont développés de telle sorte qu'ils réalisent lors de l'exploitation dans le réseau de données (4) un procédé, lors duquel :
a) un message (RE) est transmis par les lunettes intelligentes (1) à un ordinateur d'authentification (2) du réseau de données (4) au moyen d'un transfert de données numérique dans le réseau de données (4) ;
b) l'ordinateur d'authentification (2) génère en réaction au message transmis (RE) un premier code de transaction (TC) et le transmet au moyen d'un transfert de données numérique dans le réseau de données (4) aux lunettes intelligentes (1) ;
c) des données d'autorisation (AD) d'un utilisateur (U) sont lues en réaction à un premier processus de commande sur un terminal (3) n'appartenant pas aux lunettes intelligentes (1) sans interposition des lunettes intelligentes (1) dans le réseau de donnés (4) et sont traitées par l'ordinateur d'authentification (2) qui exécute une authentification de l'utilisateur (U) en se basant sur les données d'autorisation (AD), dans lequel dans le cadre de l'authentification, outre les données d'autorisation (AD), il est vérifié si un code transféré pendant l' authentification qui est affiché sur un appareil indépendant de l'utilisateur est entré dans le terminal (3) ;
d) dans le cas d'une authentification réussie de l'utilisateur (U), un second code de transaction (TC') est lu en réaction à un second processus de commande sur le terminal (3) dans le réseau de données (4) et est mis à disposition de l'ordinateur d'authentification (2) ;
e) l'ordinateur d'authentification (2) vérifie si le second code de transaction (TC') concorde avec le premier code de transaction (TC) ;
f) au cas où la vérification à l'étape e) révèle que le second code de transaction (TC') concorde avec le premier code de transaction (TC), une autorisation d'accès (TO) de l'ordinateur d'authentification (2) est mise à disposition pour les lunettes intelligentes (1) et mémorisée dans les lunettes intelligentes (1), dans lequel l'autorisation d'accès (TO) permet l'accès des lunettes intelligentes (1) à un ou plusieurs services prédéterminés (SE) dans le réseau de données (4).

13. Système d'authentification pour un réseau de données (4) selon la revendication 12, qui est configuré pour la réalisation d'un procédé selon une des revendications 2 à 11.
